Europäisches Patentamt

European Patent Office

Office européen des brevets

(19)

(11) Publication number: **0 457 939 B1**

# EUROPEAN PATENT SPECIFICATION

(12)

(45) Date of publication of patent specification: **27.07.94**  (51) Int. Cl.5: **C09D 7/12**

(21) Application number: **90109636.2**

(22) Date of filing: **21.05.90**

(54) **Paint rheology control additive containing hydrophobic colloidal silica.**

(43) Date of publication of application:
**27.11.91 Bulletin 91/48**

(45) Publication of the grant of the patent:
**27.07.94 Bulletin 94/30**

(84) Designated Contracting States:
**AT BE CH DE DK ES FR GB GR IT LI LU NL SE**

(56) References cited:
**EP-A- 0 130 296**
**US-A- 4 416 941**
**US-A- 4 455 331**

(73) Proprietor: **BASF Corporation**
**Inmont Division,**
**1255 Broad Street,**
**P.O. Box 6001**
**Clifton, New Jersey 07015-6001(US)**

(72) Inventor: **Mc Clanahan, Craig**
**51 Darlyn Drive**
**Bowling Green, Ohio 43402(US)**
Inventor: **Thieben, Lawrence E.**
**1036 Michigan Avenue**
**Waterville, Ohio 43566(US)**

(74) Representative: **Münch, Volker, Dr. et al**
**BASF Lacke + Farben AG**
**Patente/Lizenzen/Dokumentation**
**Postfach 61 23**
**D-48136 Münster (DE)**

## Description

### BACKGROUND OF THE INVENTION

This invention relates to a rheology control additive for use in numerous coating compositions including both conventional and high solids systems.

It is desirable that a paint's rheological character be such that it can easily be applied to a substrate in a manner that produces an attractive and defect free coating. Defects that may occur in a coating include those resulting from the following: sagging; cratering; picture framing; and unwanted pigment movement. The latter can produce a mottled appearance that can be particularly pronounced when aluminum flakes are used in a paint in order to produce a metallic or iridescent effect.

A paint's susceptibility to the above defects is greatly diminished if it has a high viscosity at low shear rates once it is applied to the substrate. However, in order for the paint to be properly atomized by spray equipment it must have a low viscosity at high shear rates. Thus, it is generally desirable to formulate the paint so that it exhibits a pseudoplastic rheology, ie, it has a high viscosity at low shear rates and a low viscosity at high shear rates. Such a rheology is typically introduced into a paint through the use of additives.

control additive for various coating systems as presented in the following U.S. Patents: 4,680,204; 4,238,387; 3,607,822 and in the supplier's literature, Technical Bulletin Pigments--Aerosil as a Thickening Agent for Liquid Systems, pp. 9-24, Degussa Corp. Much of the rheological character derived from the colloidal silica is a result of structure developed by hydrogen bonding between the silica particles.

The properties of the colloidal silica may be changed via chemical reaction. Several silica suppliers manufacture silica that has been treated to make a portion of its surface hydrophobic. These modified silicas promote humidity resistance in the coating but may be less effective at controlling coating rheology than hydrophilic colloidal silica. These differences are discussed in the Degussa Technical Bulletins: Hydrophobic Aerosil--Manufacture, Properties and Applications, No. 6, pp. 8,9 and Special Effects When Using Aerosil R972 in Coating Systems, pp. 3,4,9.

U.S. Patent Nos. 4,416,941 and 4,429,066 teach that a fluoropolymeric surfactant can be used to enhance the rheological effectiveness of hydrophilic colloidal silica. This invention relates to the use of such an enhancer or bridging agent to improve the flow character of coating compositions containing hydrophobically modified colloidal silica. Surprisingly, in certain compositions the synergistic effect of the bridging agent is greater with the hydrophobic silica than the hydrophilic. The action of the rheology control additive is a function of the nature of the resin and solvents used in the coating composition. In many various compositions the bridging agent can be used in combination with the hydrophobically modified colloidal silica to produce highly pseudoplastic coatings which can coat a substrate in a defect free manner.

### SUMMARY OF THE INVENTION

An additive for coating compositions including primers, sealers, color coats and clear coats which comprises:

(a) 50-99.9% by weight hydrophobically modified colloidal silica and

(b) 0.1-50% by weight bridging agent. The bridging agent being a nonionic fluorocarbon polymer that has ethylene oxide linkages and a weight average molecular weight of 5,000-50,000 and contains 2-25% by weight, based on the weight of the fluorocarbon polymer, of fluorine.

### DESCRIPTION OF THE INVENTION

The additive of this invention promotes pseudoplastic rheology in conventional and high solids solvent borne coating compositions. The additive is used at a level of about 0.1-30% by weight per weight of the coating composition. The rheology that the additive imparts to the paint permits the application of attractive, defect free films using conventional equipment. Additionally, the additive retards pigment settling thereby improving the stability and performance of the paint.

The silica (silica dioxide) used in this additive has a primary particle size of 0.001-100 microns and a surface area of 50-500 square meters per gram and has been surface treated. There are various ways for producing the silica that is later surface treated. A common method is by the hydrolysis of silicon tetrachloride vapor in a flame of hydrogen and oxygen. This type of silica is often referred to as fumed, amorphous or pyrogenic silica. It typically has a $SiO_2$ content of greater than 98% by weight and preferably greater than 99.6% by weight. An example of such a silica is Aerosil 200 manufactured and sold by Degussa corporation.

Another source a silica for use in this additive is naturally occurring ore that can be ground to particle sizes suitable for use in some coating compositions, ie between .5 and 50 microns. Ores can be found that have silicon dioxide contents of greater than 99% by weight.

The additive of this invention uses colloidal silica which has been partially or totally surfaced modified. Surface modifications may be made through the silanization of the hydroxyl groups on the silica particle surface. The silane type chemicals used in the process contain at least one hydrophobic moiety thereby changing a portion or all of the silica particle surface from hydrophilic in nature to hydrophobic. Silane type chemicals that may be used in the surface treatment include, but are not restricted too, the following: dimethyl dicholorsilane; hexamethyl disilazane; and trimethoxyoctylsilane. Examples of such treated colloidal silica that are commercially available are Aerosil R972, Aerosil R812 and Aerosil R805 all manufactured by Degussa Corp. Anywhere from 1-100% of the surface silanol groups on the surface of the colloidal silica may be reacted with the silanes. Preferably 30-80% of the surface silanol groups are reacted.

An alternative way of imparting hydrophobicity to the colloidal silica is by treatment with various silicon oils. The oils can be used to cover between 1-100% of the silica particle surface. Aerosil R202, available from Degussa Corp. is an example of a colloidal silica modified in this manner.

The additive contains from 0.1-50% by weight of a bridging agent described as a nonionic fluorocarbon polymer having ethylene oxide linkages and a weight average molecular weight of 5,000-50,000 and contains 2-25% by weight, based on the weight of the fluorocarbon polymer, fluorine. One preferred agent is Fluorad FC 431 manufactured by 3M.

The additive is prepared by dispersing the silica in solvent, a resin solution or in the coating composition itself. The dispersion may be accomplished using any of a variety of dispersing equipment including, high speed blade dispersers, ball mills, sand mills, and attritors for example. The silica should be ground to a particle size of about between 0.001-100 microns. If the silica is dispersed in solvent or resin solution, this base may be added to the other components of the coating composition at any convenient time. The fluorocarbon polymer could be added to the paint composition at nearly any of the many manufacturing steps. It may even be possible to post added the fluorocarbon polymer to the paint or add it as part of the reducer package which is used to increase the solvent content of the paint prior to application if such is needed. Alternatively, the fluorocarbon polymer could be added to the catalyst or crosslinker containing packages of thermosetting coating compositions.

The additive may be used in a wide variety of conventional or high solids coating compositions. Included in such compositions would be compositions used as primers, sealer, color coats or clear coats. These coatings could be intended for use over any of a variety of substrates, including, metal, wood, plastics, ceramics, concrete, asphalt or previously coated materials. The coating compositions could be thermosetting or thermoplastic. They could be based on any of a variety of resin systems including, but not restricted to: epoxies, acrylics, polyesters, alkyds, acrylated alkyds, alkylated acrylics, or mixtures thereof. The coatings in which this additive can be used may be designed as air-dry, oven bake or radiation cured coatings. The additive may retard sagging and enhance sag resistance during or after application and/or during baking.

The additive is particularly useful in high solids coating compositions and in basecoat-clearcoat coating compositions. In the latter, the color coat is applied first, followed by a clear coating. The system is designed so that the transparent clear coat is in firm adherence to the color coat. This type of finish is commonly used as an attractive automotive finish. The additive of this invention, when included in the basecoat composition, can improve the rheology of the paint. It improves sag resistance and enhances the metallic effect produced by iridescent pigments such as aluminum or mica flake. The additive may greatly reduce any tendency for the basecoat to take on a mottled appearance.

## EXAMPLE 1

This example is comprised of a series of tests where the action of the additive in various resin solutions was monitored. The rheological changes brought about in the resin solutions exemplify the action of the additive in coating compositions. The absence of pigments and other additives in these compositions remove any possible interferences or interactions which might cloud the action of the additive. The use of these compositions to first show the action of the additive should assist in making the interpretation of the data less difficult. The effectiveness of the additive in specific coating compositions will be demonstrated in examples 2 and 3. The tests in this example will show 1) the improvement in rheology caused by the synergism between the two components of the additive; 2) that the effectiveness of this additive and the additive which is the subject of U.S. Pat. 4,416,941 are different and that they vary with the nature of the resin and solvent used to make the composition. Six different resin systems were used in these tests. They are listed below:

A1) A 25% nonvolatiles solution of an acrylic resin with a weight average molecular weight of 9,000 and a monomer composition of: 10% styrene; 38% butyl methacrylate; 20% butyl acrylate; 35% hydroxy ethyl acrylate; and 2% acrylic acid by weight. The solvent contained 89.3% methyl amyl ketone and 10.7% of a mixture of amyl acetate and Aromatic SC100 by weight.

A2) A 25% nonvolatiles solution of the resin described above. The solvent contained 89.3% xylene and 10.7% of a mixture of amyl acetate and Aromatic SC100 by weight.

B) A 20% nonvolatiles solution of an acrylated alkyd derived from vegetable oil fatty acids, an aliphatic polyol, mono and dibasic aromatic acids modified with esters of acrylic and methacrylic acids and an aromatic substituted vinyl monomer. The solvent contained 42.9% toluene, 37.2% butyl acetate, 18.9% xylene and 1% aromatic naphtha 100 by weight.

C) A 30% nonvolatiles solution of an alkyd resin made from a combination of vegetable oil fatty acids, pentaerythritols, phthalic anhydride and benzoic acid. The solvent contained 96.8% xylene and 3.2% aromatic naphtha 100 by weight.

D) A 30% nonvolatiles solution of a polyester resin in xylene. The polyester was based on the following monomers: neopentyl glycol; trimethylol propane; adipic acid; isophthalic acid. It had an acid number less than 12.

E) A 30% nonvolatiles solution of an epoxy resin of the class of polyglycidamides. The resin had a molecular weight of approximately 1,600 and a epoxy equivalent weight of 320. The solvent contained 73.7% methyl isobutyl ketone, 15.8% n-butanol and 10.5% propylene glycol monomethyl ether by weight.

Colloidal silica was dispersed in resin solutions A-E using an Eiger model VSE mini motor mill. The milling chamber was loaded with zirconium beads and was operated at 3,000 rpm. The mixtures of silica and resin solution were passed through the mill once or twice until nearly all the silica was ground to below 20 microns in size as measured by a Hegman gauge. The dispersions contained either 8% or 6% by weight of silica based on the total weight of the dispersion. Two types of colloidal silica were used in these tests--a hydrophilic silica with a primary particle size of 12 nm and a surface area of 200 square meters per gram and a hydrophobic colloidal silica with a primary particle size of 16 nm and a surface area of 120 square meters per gram. The hydrophobic silica was silanated with dicholordimethyl silane. About 70% of the free hydroxyls were methylated by this treatment.

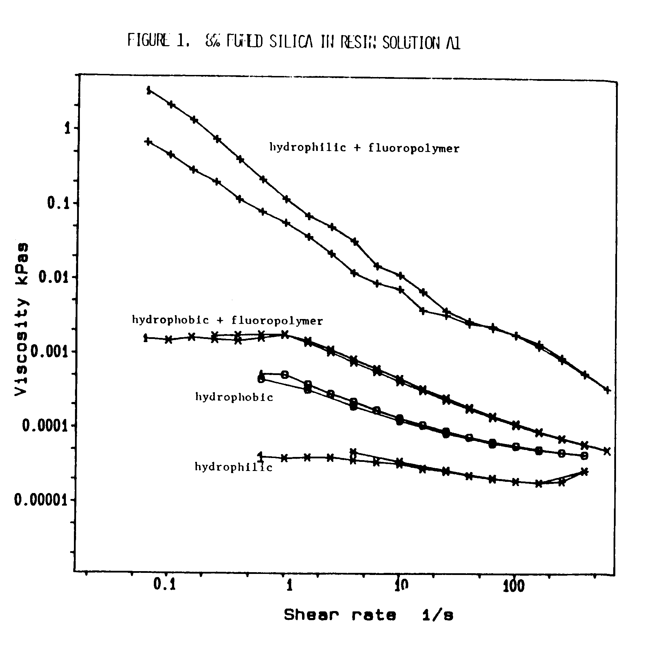

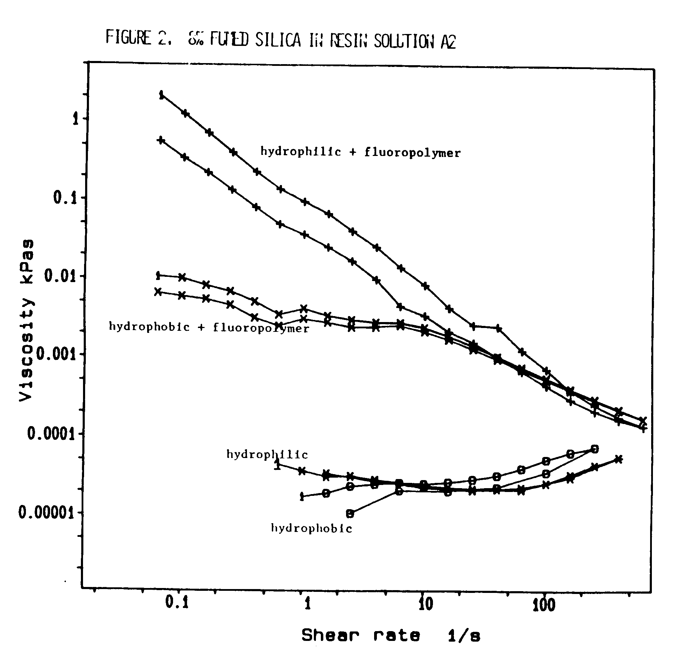

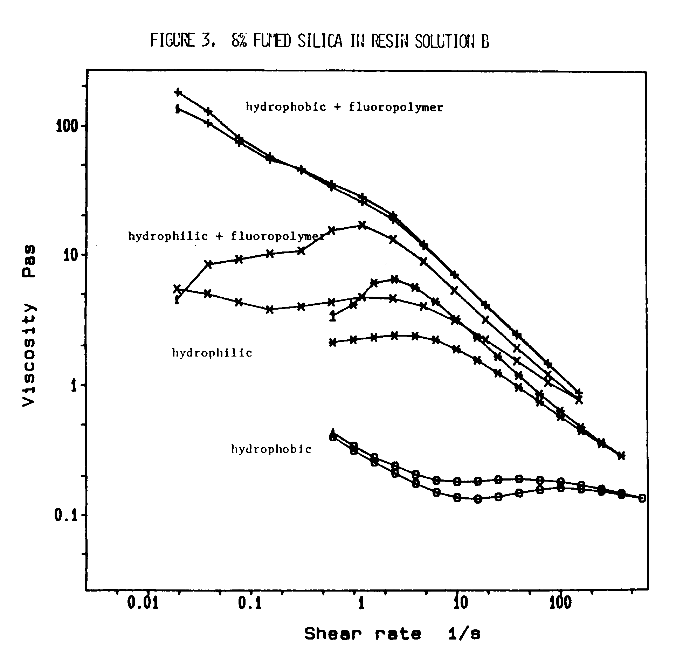

The viscosity profiles of the dispersions were measured before and after addition of the fluorocarbon polymer. The polymer was nonionic having about 50% by weight of ethylene oxide linkage and containing about 10-20% by weight fluorine and having a molecular weight of about 20,000. The polymer was added to the dispersions as a 50% solution in amyl acetate. The polymer was added to a level of 0.2% polymer by weight per weight of the dispersion. The viscosity measurements were made on a Bohlin VOR rheometer using the 30 mm parallel plate geometry. The temperature was controlled at 25°C and a solvent trap was used to prevent the sample from forming a skin. The viscosity was recorded over a range of shear rates from low to high values and then back to low values. The viscosity profiles for the dispersions of the two silicas in resin solutions A1, A2, and B are shown in Figures 1-3. Tabulated values of the viscosities at a shear rate of 0.25 $s^{-1}$ are listed in Table I.

The acrylic resin used to make the solutions A1 and A2 is similar to the one used in the paint compositions described in the examples in U.S. patent 4,416,941. In accordance with that patent a tremendous increase in low shear rate viscosity is observed when the fluorocarbon polymer is added to the dispersion of the hydrophilic colloidal silica in this resin. The behavior of the hydrophobic fumed silica dispersions are markedly different. There is comparatively little increase in viscosity upon the addition of the fluorocarbon polymer.

Surprisingly, in the alkyd based system, however, there is a strong synergism between the hydrophobic silica and the fluorocarbon polymer. In this case, the interaction between the hydrophilic silica and the fluorocarbon polymer is muted relative to the interaction in resin system A.

Clearly, the interaction between the hydrophobically modified silica and the fluorocarbon polymer is influenced by both the resin and solvent in the composition. Three other examples are given in Table II. The compositions were made with and without the fluorocarbon polymer. It was used at 0.2% by weight per weight of the composition. The results show that even in other resin systems the additive of this invention can give higher viscosities than the hydrophobic silica by itself. Note that the dispersions are only 6% silica by weight as opposed to 8% silica by weight as in the tests reported in Table I.

EXAMPLES 2 AND 3

These examples illustrate that the rheology control additive is effective at reducing mottling in iridescent coatings. The examples are acrylic enamel basecoat coating compositions. Control compositions comprising aluminum pigmented acrylated enamel coating compositions and test compositions having substantially the same composition except they contained approximately 0.06% by weight of the fluorocarbon polymer described in Example 1. were prepared using standard acrylated enamel coating composition mixing procedures.

Example 2 is a charcoal metallic basecoat with the following formulation:

|  | Weight % | |
| --- | --- | --- |
| Ingredients | Control | Test |
| Coarse Aluminum Pigment (1) | 1.12 | 1.12 |
| Hydrophobic Fumed Silica (2) | 1.61 | 1.61 |
| Carbon Black Pigment (3) | 0.33 | 0.33 |
| Toluene | 18.90 | 18.90 |
| Chlorinated Polyolefin (4) | 4.72 | 4.72 |
| Acrylated Enamel Vehicle (5) | 27.22 | 27.22 |
| Fluorocarbon Surfactant (6) | ----- | 0.06 |
| Acrylic Lacquer Thinner (7) | 46.10 | 46.04 |

(1) a pigment paste consisting of 60% aluminum flake and 40 % aliphatic naphtha
(2) Degussa's Aerosil R-972 (dispersed in resin (5- resin I) using a Sussmeyer Mill to 15-25 microns)
(3) Cabot's Monarch 1300 (dispersed in resin (5-resin I) using a Sussmeyer Mill to 0-5 microns)
(4) Chlorinated Polyolefin 343-3 (25% solution in Xylene) manufactured by Eastman Chemicals
(5) A blend of (I) an acrylated alkyd resin derived from vegetable oil fatty acids, an aliphatic polyol, mono & dibasic aromatic acids modified with esters of acrylic and methacrylic acids and an aromatic substituted vinyl monomer, and (II) a vegetable oil fatty acid modified polymer of esters of acrylic and methacrylic acids and an aromatic substituted vinyl monomer.
(6) FC-431 (50% solution in ethyl acetate) manufactured by 3M Co.
(7) A blend consisting of 15% acetone, 15% V.M.& P. naphtha, 17% n-butyl propionate, 20% isopropanol,11% toluene,7% xylene, and 15% n-butyl acetate.

The above compositions were sprayed onto 12"X16" steel panels that were coated with Taupe primer. The basecoats were applied to a dry film thickness of less than 2.5 mils. After a flash period a portion of the basecoat was coated with a polyurethane clear coat.

The control composition had a mottled appearance resulting from disorientation of the metal flakes. The composition containing the fluorocarbon polymer exhibited a surface free from mottling, ghosting, general discontinuities, or any visual apparition signifying disorientation of the included metal flakes. Compared to the control, the test composition had a greater sag resistance.

Example 3 is a gold metallic basecoat with the following formulation:

|  | Weight % | |
| --- | --- | --- |
| Ingredients | Control | Test |
| Coarse Aluminum Pigment (1) | 1.12 | 1.12 |
| Hydrophobic Fumed Silica (2) | 1.61 | 1.61 |
| Transparent iron Oxide Pigment (3) 0.33          0.33 | | |
| Toluene | 18.90 | 18.90 |
| Chlorinated Polyolefin (4) | 4.72 | 4.72 |
| Acrylated Enamel Vehicle (5) | 27.22 | 27.22 |
| Fluorocarbon Surfactant (6) | ----- | 0.06 |
| Acrylic Lacquer Thinner (7) | 46.10 | 46.04 |

(1) a pigment paste consisting of 60% aluminum flake and 40 % aliphatic naphtha

(2) Degussa's Aerosil R-972 (dispersed in resin (5- resin I) using a Sussmeyer Mill to 15-25 microns)

(3) Sicotrans Yellow 201 manufactured by BASF (dispersed in resin (5-resin I) using a Sussmeyer Mill to 0-5 microns)

(4) Chlorinated Polyolefin 343-3 (25% solution in Xylene) manufactured by Eastman Chemicals

(5) A blend of (I) an acrylated alkyd resin derived from vegetable oil fatty acids, an aliphatic polyol, mono & dibasic aromatic acids modified with esters of acrylic and methacrylic acids and an aromatic substituted vinyl monomer, and (II) a vegetable oil fatty acid modified polymer of esters of acrylic and methacrylic acids and an aromatic substituted vinyl monomer.

(6) FC-431 (50% solution in ethyl acetate) manufactured by 3 M Co.

(7) A blend consisting of 15% acetone, 15% V.M.& P. naphtha, 17% n-butyl propionate, 20% isopropanol,11% toluene,7% xylene, and 15% n-butyl acetate.

The above compositions were sprayed onto 12"X16" steel panels that were coated with Taupe primer. The basecoats were applied to a dry film thickness of less than 2.5 mils. After a flash period a portion of the basecoat was coated with a polyurethane clear coat.

The control composition was mottled resulting from the disorientation of the metal flakes. The composition containing the fluorocarbon polymer, exhibited a surface free from mottling, ghosting, general discontinuities, or any visual apparition signifying disorientation of the included metal flakes. Compared to the control, the test composition had a greater sag resistance.

EP 0 457 939 B1

## TABLE I

| Resin System | Silica Type* | Fluorocarbon Polymer | Viscosity (Pas at $\gamma = 0.25s^{-1}$) |
|---|---|---|---|
| A1 (acrylic) | hydrophilic | - | 0.07 |
| " " | hydrophilic | + | 746 |
| " " | hydrophobic | - | 0.7 |
| " " | hydrophobic | + | 1.5 |
| A2 (acrylic) | hydrophilic | - | 0.057 |
| " " | hydrophilic | + | 404 |
| " " | hydrophobic | - | 0.02 |
| " " | hydrophobic | + | 6.69 |
| B (acrylated | hydrophilic | - | 2.5 |
| " alkyd) | hydrophilic | + | 10.6 |
| " " | hydrophobic | - | 0.50 |
| " " | hydrophilic | + | 47.3 |

* The silica was used at a level of 8% by weight per weight of the composition.

## TABLE II

| Resin System | Silica Type* | Fluorocarbon Polymer | Viscosity (Pas at $\gamma = 0.25s^{-1}$) |
|---|---|---|---|
| C (alkyd) | hydrophobic | - | 13.4 |
| " " | " | + | 59.4 |
| D (polyester) | hydrophobic | - | 1.53 |
| " " | " | + | 7.3 |
| E (epoxy) | hydrophobic | - | 0.02 |
| " " | " | + | 4.7 |

* The silica was used at a level of 6% by weight per weight of the composition.

## Claims

1. An additive comprising
   a) 50 - 99.9 % by weight hydrophobically modified colloidal silica and
   b) 0.1 - 50 % by weight of a bridging agent the bridging agent being a nonionic fluorocarbon polymer that has ethylene oxide linkages and a weight average molecular weight of 5,000 - 50,000 and contains 2 - 25 % by weight, based on the weight of the fluorocarbon polymer, of fluorine.

2. The additive of claim 1 in which the colloidal silica has 1 - 100 % of its surface made hydrophobic.

3. The additive of claim 1 in which the colloidal silica is fumed silica with 1 - 100 % of its surface made hydrophobic via silanization with dimethyl dichlorosilane or hexamethyl disilazane or trimethoxyoctylsilane or a mixture thereof.

7

4. The additive of claim 1 in which the colloidal silica is fumed silica with 1-100% of its surface made hydrophobic via treatment with a silicon based oil.

5. The additive of claim 1 in which the silica is hydrophobically modified colloidal silica with a primary particle size of between 0.001-100 microns and a surface area of about 50-500 square meters per gram.

6. The additive of claim 1 in which the silica is hydrophobically modified silica obtained by the grinding of a naturally occurring ore.

**Patentansprüche**

1. Zusatzmittel bestehend aus
   a) 50-99,9 Gew.-% hydrophob modifizierter kolloidaler Kieselsäure und
   b) 0,1-50 Gew.-% eines Verbrückungsmittels, wobei das Verbrückungsmittel ein nichtionisches Fluorkohlenstoffpolymer mit Ethylenoxidverknüpfung, einem gewichtsmittleren Molekulargewicht von 5000-50 000 und einem Fluorgehalt von 2-25 Gew.-% bezogen auf das Gewicht des Fluorkohlenstoffpolymers darstellt.

2. Zusatzmittel nach Anpsruch 1, worin 1-100% der Oberfläche der kolloidalen Kieselsäure hydrophobiert sind.

3. Zusatzmittel nach Anspruch 1, worin die kolloidale Kieselsäure Gasphasenkieselsäure ist, deren Oberfläche zu 1-100% durch Silanisierung mit Dimethyldichlorsilan oder Hexamethyldisilazan oder Trimethoxysilan oder deren Mischung hydrophobiert wurde.

4. Zusatzmittel nach Anspruch 1, worin die kolloidale Kieselsäure Gasphasenkieselsäure ist, deren Oberfläche zu 1-100% durch Behandlung mit einem Öl auf Siliconbasis hydrophobiert wurde.

5. Zusatzmittel nach Anspruch 1, worin die Kieselsäure hydrophob modifizierte kolloidale Kieselsäure mit einer Primärteilchengröße zwischen 0,001-100 Mikron und einer Oberfläche von etwa 50-500 Quadratmetern pro Gramm ist.

6. Zusatzmittel nach Anspruch 1, worin die Kieselsäure hydrophob modifizierte Kieselsäure ist, die durch Mahlen eines natürlich vorkommenden Erzes erhalten wurde.

**Revendications**

1. Additif comprenant
   a) 50 - 99,9 % en poids d'une silice colloïdale à hydrophobie modifiée et
   b) 0,1 - 50 % en poids d'un agent pontant, l'agent pontant étant un polymère fluorocarboné non ionique gui a des liaisons d'oxyde d'éthylène et une masse molaire moyenne pondérale de 5.000 - 50.000 et contient 2 - 25 % en poids de fluor, sur la base du poids du polymère fluorocarboné.

2. Additif selon la revendication 1, dans lequel 1 - 100 % de la surface de la silice colloïdale est rendu hydrophobe.

3. Additif selon la revendication 1, dans lequel la silice colloïdale est de la silice fumée dont 1 - 100 % de la surface est rendu hydrophobe au moyen d'une silanisation avec du diméthyldichlorosilane ou de l'hexaméthyldisilazane ou du triméthoxyoctylsilane ou un de leurs mélanges.

4. Additif selon la revendication 1, dans lequel la silice colloïdale est de la silice fumée dont 1 - 100 % de la surface est rendu hydrophobe au moyen d'un traitement avec une huile à base de silicium.

5. Additif selon la revendication 1, dans lequel la silice est une silice colloïdale à hydrophobie modifiée, ayant une grosseur de particule de 0,001-100 microns et une surface spécifique d'environ 50-500 mètres carrés par gramme.

6. Additif selon la revendication 1, dans lequel la silice est une silice à hydrophobie modifiée obtenue par broyage d'un minerai existant dans la nature.

FIGURE 1. 8% FUMED SILICA IN RESIN SOLUTION A1

FIGURE 2.  8% FUMED SILICA IN RESIN SOLUTION A2

EP 0 457 939 B1

FIGURE 3.  8% FUMED SILICA IN RESIN SOLUTION B

EP 0 457 939 B1